# EUROPEAN PATENT APPLICATION

(11) **EP 1 773 046 A2**
(43) Date of publication of application: **11.04.2007**
(21) Application number: 06121630.5
(22) Date of filing: 02.10.2006
(51) Int. Cl.: H04N 5/44, H04N 5/76, H04N 5/445

(54) **Display apparatus and control method thereof**

(30) Priority: 08.10.2005 KR 20050094671
(71) Applicant: Samsung Electronics Co., Ltd., Suwon-si, Gyeonggi-Do (KR)
(72) Inventor: Yun, Young-hwa, Seoul (KR)
(74) Representative: Clark, Charles Robert

(57) **Abstract**

A display apparatus comprises: a signal receiving part that receives a broadcast signal; a signal processing part that processes the received broadcast signal; a display; a broadcast program memory that stores a broadcast program; an up/down reproduction selecting part that selects a reproduction of the broadcast program stored in the broadcast program memory; and a controller that controls the signal processing part to process the broadcast program corresponding to selection of the up/down reproduction selecting part according to a stored temporal order of the stored broadcast programs and display the processed broadcast program on the display.

Thus, the present invention overcomes the above disadvantages and other disadvantages not described above. Also, the present invention is not required to overcome the disadvantages described above, and an exemplary embodiment of the present invention may not overcome any of the problems described above.

## Description

The present invention relates to a display apparatus and a control method for the display apparatus. More specifically, but not exclusively, methods an apparatuses consistent with the present invention relate to a display apparatus having a digital record function.

A display apparatus may incorporate a Personal Video Recorder (PVR) function. Alternatively, a PVR can be incorporated into a set-top box connected to the display apparatus. A user may record desired broadcast programs using the PVR function without using separate tapes. A digital record function, such as a PVR function, records received broadcast signals in a memory provided in the display apparatus as digital signals, and reproduces the digital signals from the memory.

For example, when the user selects a record function while he watches television, the display apparatus stores a broadcast signal of a currently televised broadcast program in a memory as a digital signal. The user may select and reproduce a desired one of broadcast programs stored in the memory.

In this case, the desired broadcast program must be selected from a list of the stored broadcast programs in order to reproduce that program. If broadcast programs in the list are represented by file names and the user does not know a file name of the desired broadcast program, it is inconvenient for the user to reproduce and confirm all of the stored broadcast programs one by one from the list.

Exemplary embodiments of the present invention aim to overcome the above described disadvantages.

The present invention also provides a display apparatus comprising: a signal receiving part that receives a broadcast signal; a signal processing part that processes the received broadcast signal; a display; a broadcast program memory that stores a broadcast program; an up/down reproduction selecting part that selects a reproduction of the broadcast program stored in the broadcast program memory; and a controller that controls the signal processing part to process the broadcast program corresponding to selection of the up/down reproduction selecting part according to a stored temporal order of the stored broadcast programs and display the processed broadcast program on the display.

According to another aspect of the invention, the controller switches to the broadcast program corresponding to selection of the up/down reproduction selecting part selected according to the stored temporal order of the stored broadcast programs while a broadcast signal received from the signal receiving part is being displayed.

According to another aspect of the invention, the up/down reproduction selecting part comprises reproduction up and down keys for selection of the broadcast program to be reproduced.

According to another aspect of the invention, the display apparatus further comprises a user selecting part having top, bottom, left, and right buttons, wherein the reproduction up/down keys are prepared as the left and right buttons, respectively of the user selecting part.

According to another aspect of the invention, the display apparatus further comprises a channel selecting part having channel up/down keys for selection of a channel of the broadcast program, wherein the channel up/down keys are prepared as the top and bottom buttons, respectively of the user selecting part.

According to another aspect of the invention, the controller controls the signal processing part to receive the broadcast signal corresponding to a selected channel and display the received broadcast signal on the display when the channel up/down keys are selected, and controls the signal processing part to display the broadcast program stored in the broadcast program memory on the display when the reproduction up/down keys are selected.

According to another aspect of the invention, the controller causes to reproduce the broadcast program stored next to a lastly reproduced broadcast program according to the stored temporal order of the stored broadcast programs when the reproduction up key is selected.

According to another aspect of the invention, the controller causes to reproduce the broadcast program stored prior to the lastly reproduced broadcast program when the reproduction down key is selected.

The present invention also provides a control method of a display apparatus, the display apparatus comprising a signal receiving part that receives a broadcast signal, a signal processing part that processes the received broadcast signal, a broadcast program memory that stores a broadcast program, an up/down reproduction selecting part that selects reproduction of the broadcast program stored in the broadcast program memory, and a display, the method comprising: displaying the broadcast program received from the signal receiving part on the display; selecting the up/down reproduction selecting part; and by the signal processing part, processing the broadcast program corresponding to the selection of the up/down reproduction selecting part according to a stored temporal order of the stored broadcast programs and displaying the processed broadcast program on the display.

According to another aspect of the invention, the up/down reproduction selecting part comprises reproduction up and down keys for selection of the broadcast program to be reproduced.

According to another aspect of the invention, the display apparatus further comprises a user selecting part having top, bottom, left, and right buttons, wherein the reproduction up/down keys are prepared as the left and right buttons, respectively of the user selecting part.

According to another aspect of the invention, the display apparatus further comprises a channel selecting part having channel up/down keys for selection of a channel of the broadcast program, wherein the channel up/down keys are prepared as the top and bottom buttons, respectively of the user selecting part.

According to another aspect of the invention, the control method further comprises controlling the signal processing part to receive the broadcast signal corresponding to a selected channel and displaying the received broadcast signal on the display when the channel up/down keys are selected, and displaying the broadcast program stored in the broadcast program memory on the display when the reproduction up/down keys are selected.

According to another aspect of the invention, the broadcast program stored next to a lastly reproduced broadcast program is reproduced according to the stored temporal order of the stored broadcast programs when the reproduction up key is selected.

According to another aspect of the invention, the broadcast program stored prior to the lastly reproduced broadcast program is reproduced when the reproduction down key is selected.

Embodiments of the present invention are now described by way of example, with reference to the accompanying drawings of which:
Figure 1 is a schematic diagram of a control block of a display apparatus according to an exemplary embodiment of the present invention;
Figure 2 is a schematic front view of a user selecting part according to an exemplary embodiment of the present invention; and
Figure 3 is a control flow chart illustrating a control process of the display apparatus according to an exemplary embodiment of the present invention.

Reference will now be made in detail to exemplary embodiments of the present invention, examples of which are illustrated in the accompanying drawings.

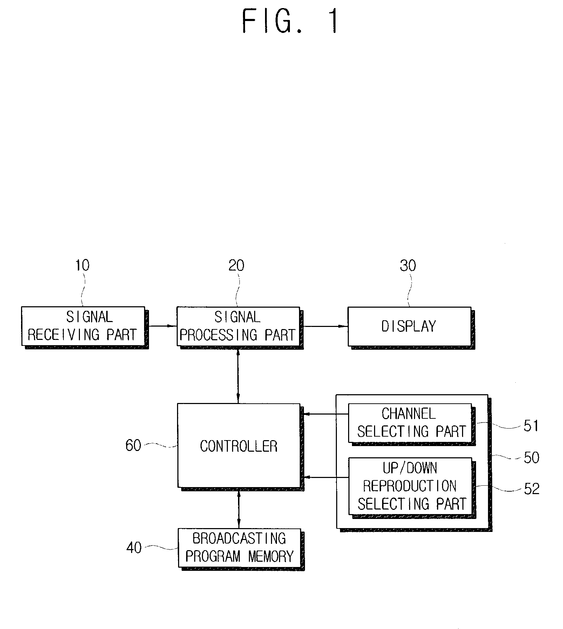

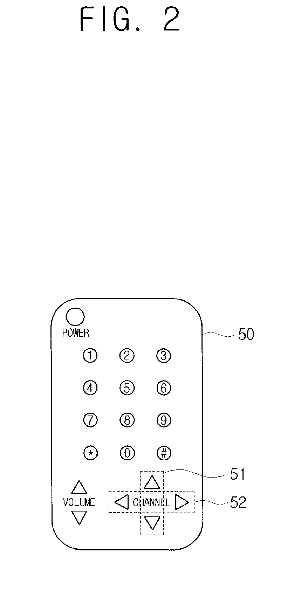

Figure 1 is a control block diagram of a display apparatus according to an exemplary embodiment of the present invention, and Figure 2 is a front view of a user selecting part or remote controller having a user selection portion according to an exemplary embodiment of the present invention.

As shown in Figure 1, a display apparatus includes a signal receiving part 10, a signal processing part 20, a display 30, a broadcast program memory 40, a user selecting part 50, and a controller 60.

The signal receiving part 10 includes a tuner (not shown) for receiving broadcast signals. The broadcast signal received in the tuner (not shown) is displayed on the display 30 through a process in the signal processing part 20. Here, the display 30 may be implemented as various types of displays, for instance as a DLP (Digital Light Processing), an LCD (Liquid Crystal Display), a PDP (Plasma Display Panel), or the like and the signal processing part 20 may include a scaler (not shown) for scaling the broadcast signals in accordance with an output format of the display 30, for example, a vertical frequency, resolution, picture ratio, etc.

The broadcast program memory 40 stores broadcast programs and may be implemented by a Flash Memory, a Hard Disk, an EEPROM (Electrically Erasable Programmable Read-Only Memory), an EPROM (Erasable Programmable Read-Only Memory), or the like.

Here, if a received broadcast program is an analog broadcast signal, it is converted into a digital signal and then stored in the broadcast program memory 40. At the same time, an order of broadcast program stored time according to the date and hour in which the broadcast programs are stored in the broadcast program memory 40 may be also stored.

The user selecting part 50 includes a keypad having keys and the like for selecting channels of the broadcast programs. In addition, the user selecting part 50 may further include menu keys provided in a remote controller or a casing of the display apparatus, and a key signal generating part for generating a key signal corresponding to a key operation.

Here, as shown in Figure 2, the user selecting part 50 in this embodiment includes a channel selecting part 51 having channel up/down keys for selecting a channel of a received broadcast program, i.e., a currently televising program, and an up/down reproduction selecting part 52 for selecting reproduction of programs stored in the broadcast program memory 40. Here, the up/down reproduction selecting part 52 has reproduction up/down keys for selecting a broadcast program to be reproduced.

In addition, the channel up/down keys of the channel selecting part 51 and the reproduction up/down keys of the reproduction selecting part 52 may be grouped. In this case, for example, the channel up/down keys of the channel selecting part 51 may be set in a vertical direction and the reproduction up/down keys of the reproduction selecting part 52 may be set in a horizontal direction.

For example, when a user selects a channel up key of the channel selecting part 51 while he is watching a broadcast program corresponding to Channel No. 7, he can switch to, or watch a broadcast program corresponding to Channel No. 8. In addition, if broadcast programs are stored in the broadcast program memory 40, when the user selects one of the reproduction up/down keys of the up/down reproduction selecting part 52 while he is watching the broadcast program corresponding to Channel No. 8, a broadcast program stored in the broadcast program memory 40 is reproduced corresponding to the selected key. Here, the user may select broadcast programs stored prior to or next to the reproduced broadcast program using the reproduction up/down keys of the up/down reproduction selecting part 52.

In addition, the user selecting part 50 may include a record key by means of which the user may record a currently televising broadcast program. Also, a display apparatus that receives EPG (Electronic Programming Guide) information may record broadcast programs using the EPG information.

When the up/down reproduction selecting part 52 is selected while the user is watching a broadcast program received through the signal receiving part 10, the controller 60, which may be implemented as a CPU, a microcomputer or the like, controls a broadcast program stored in the broadcast program memory 40 to be reproduced.

More specifically, when one of the channel up/down keys of the channel selecting part 51 provided in the user selecting part 51 is selected, the controller 60 switches a channel of the broadcast program received through the signal receiving part 10, i.e., a channel of a currently televised program, according to a selected key. In addition, when one of the reproduction up/down keys of the reproduction selecting part 52 is selected while the user is watching the currently televised program, the controller 60 reproduces a broadcast program stored in the broadcast program memory 40, so that the user may access to the stored broadcast program relatively easily.

In this case, if the reproduction up key of the up/down reproduction selecting part 52 is selected, the controller 60 reproduces a program stored next to the most recently reproduced broadcast program according to a stored temporal order of broadcast programs (as stored in the broadcast program memory 40). In addition, if the reproduction down key is selected, the controller 60 reproduces a broadcast program stored prior to the most recently reproduced broadcast program.

In addition, if the reproduction up key of the up/down reproduction selecting part 52 is selected while the latest or most recently stored broadcast program is being reproduced, the controller 60 reproduces the earliest stored broadcast program. Similarly, if the reproduction down key of the up/down reproduction selecting part 52 is selected while the earliest or oldest stored broadcast program is being reproduced, the controller 60 reproduces the most recently stored broadcast program.

Further, when the record key provided in the user selecting part 50 is selected, the controller 60 stores the currently televised program in the broadcast program memory 40. In case of a display apparatus that receives the EPG information, the controller 60 stores a broadcast program reserved for recording in the broadcast program memory 40. For example, when the user selects or reserves broadcast programs to be recorded, the controller 60 stores reservation information, such as start time and end time of broadcast programs reserved using the EPG information, in a predetermined memory (not shown), and stores the broadcast programs in the broadcast program memory 40 based on the stored reservation information.

In addition, when the channel selecting part 51 is selected while a stored broadcast program is being reproduced, the controller 60 displays the currently televised program on a screen and switches a channel of the broadcast program in response to the channel up/down keys of the selected channel selecting part 51.

For example, assuming that broadcast programs recorded at 14:00 on October 2, 17:00 on October 2, 09:00 on October 3, and 10:00 on October 4 are stored in the broadcast program memory 40 and the most recently reproduced broadcast program of the stored broadcast programs is the broadcast program recorded at 17:00 on October 2.

If a channel number of a broadcast program being watched is 9, when the user selects the down key of the channel selecting part 51, a broadcast program corresponding to channel No. 8 is displayed. In addition, when the user selects the reproduction down key of the up/down reproduction selecting part 52 while he is watching the broadcast program corresponding to channel No. 8, a broadcast program recorded at 14:00 on October 2, which is stored before 17:00 on October 2, is reproduced. In addition, when the user selects the down key of the up/down reproduction selecting part 52 again, the most recently stored broadcast program recorded at 10:00 on October 4 is reproduced since there is no broadcast program stored before 14:00 on October 2.

In this way, while watching the currently televised broadcast program, the user may immediately reproduce the broadcast programs stored in the broadcast program memory 40 using the up/down reproduction selecting part 52.

If there is no broadcast program stored in the broadcast program memory 40, the controller 60 continues to display the currently televised broadcast program even if the up/down reproduction part 52 is selected.

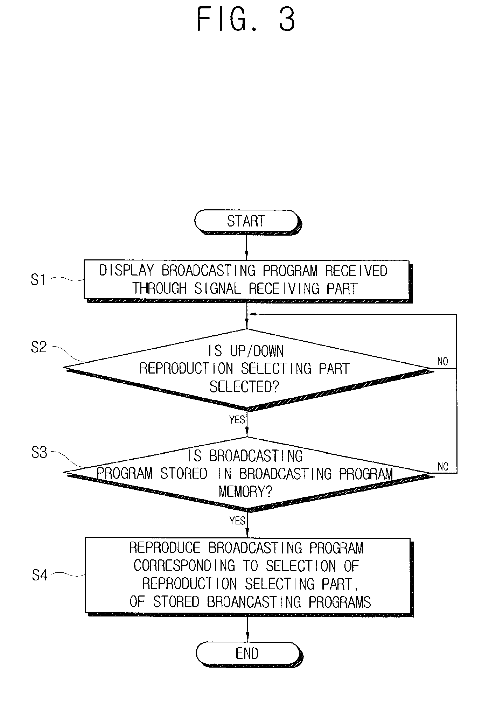

A control method according to an exemplary embodiment of the present invention will now be described with reference to the flow chart of Figure 3.

As shown in Figure 3, the display apparatus displays a broadcast program received through the signal receiving part 10 at operation S1.

Then, when the up/down reproduction selecting part 52 is selected at operation S2, the controller 60 confirms whether or not broadcast programs are stored in the broadcast program memory 40 at operation S3, and reproduces a broadcast program in response to the selected up/down reproduction selecting part 52, of the stored broadcast programs at operation S4.

When one of the reproduction up/down keys included in the up/down reproduction selecting part 52 is selected, the controller 60 reproduces the broadcast programs stored in the broadcast program memory 40. Here, if the reproduction up key is selected, the controller 60 reproduces a broadcast program stored next to, or after the most recently reproduced broadcast program. In addition, if the reproduction down key is selected, the controller 60 reproduces a broadcast program stored prior to the most recently reproduced broadcast program.

In this way, the user can select and reproduce stored broadcast programs with less difficulty than conventional systems, and whilst he is watching a currently televised broadcast program.

As apparent from the description, the present invention provides a display apparatus which is capable of improving accessibility of users by preparing channel selection buttons and reproduction selection buttons as top/bottom/left/right buttons to reproduce broadcast programs stored in a broadcast program memory in a way similar to a way to switch a channel of a currently televising broadcast program, and a control method thereof.

In addition, the present invention provides a display apparatus which is capable of improving user's convenience by facilitating reproduction of broadcast programs stored in a broadcast program memory while a user is watching a broadcast program, and a control method thereof.

Although exemplary embodiments of the present invention have been shown and described, it will be appreciated by those skilled in the art that changes may be made in these exemplary embodiments without departing from the principles of the invention, the scope of which is defined in the appended claims.

## Claims

1. A display apparatus comprising:
a receiver for receiving a broadcast signal;
a processor for processing the received broadcast signal;
a memory for storing a broadcast program;
a selector for selecting a broadcast program stored in the memory for reproduction; and
a controller for controlling the processor to process the broadcast program corresponding to a selection made from the selector, according to a stored temporal order of broadcast programs stored in the memory, and to display the processed broadcast program on the display.

2. The display apparatus according to claim 1, wherein the controller is arranged to switch the broadcast program corresponding to a selection made from the selector according to the stored temporal order of the broadcast programs stored in the memory while a broadcast signal received from the signal receiving part is being displayed.

3. The display apparatus according to claim 1 or 2, wherein the selector comprises a first set of keys for the selection of the broadcast program to be reproduced.

4. The display apparatus according to claim 3, further comprising a user selecting means having top, bottom, left, and right buttons,
wherein the first set of keys are disposed as the left and right buttons, respectively of the user selecting means.

5. The display apparatus according to claim 4, further comprising a channel selection part having second set of keys for the selection of a channel in the broadcast program,
wherein the second set of keys are disposed as the top and bottom buttons, respectively of the user selecting means.

6. The display apparatus according to claim 5, wherein the controller is arranged to control the processor to receive the broadcast signal corresponding to a selected channel and display the received broadcast signal when any one of the second set of keys are selected, and
to control the processor to display the broadcast program stored in the memory on the display when any one of the first set of keys are selected.

7. The display apparatus according to claim 6, wherein the controller is arranged to cause reproduction of the broadcast program stored next to a lastly reproduced broadcast program according to the stored temporal order of the stored broadcast programs when an up key of the first set of keys is selected.

8. The display apparatus according to claim 6, wherein the controller is arranged to cause reproduction of the broadcast program stored prior to the lastly reproduced broadcast program when the a down key of the first set of keys is selected.

9. A control method of a display apparatus, the display apparatus comprising a receiver for receiving a broadcast signal, a processor for processing the received broadcast signal, a memory for storing a broadcast program, a selector for selecting reproduction of the broadcast program stored in the memory, and a display,
the method comprising:
displaying on the display the broadcast program received from the receiver; and
processing the broadcast program corresponding to a selection made on the selector according to a stored temporal order of the stored broadcast programs and displaying the processed broadcast program on the display.

10. The control method according to claim 9, wherein the selector comprises a first set of keys for selection of the broadcast program to be reproduced.

11. The control method according to claim 10, wherein the display apparatus further comprises a user selecting part having top, bottom, left, and right buttons,
wherein the first set of keys are disposed as the left and right buttons, respectively of the user selecting part.

12. The control method according to claim 10 or 11, wherein the display apparatus further comprises a second set of keys for selection of a channel of the broadcast program,
wherein the second set of keys are disposed as the top and bottom buttons, respectively of the user selecting part.

13. The control method according to claim 12, further comprising,
controlling the processor so as to receive the broadcast signal corresponding to a selected channel,
displaying on the display the received broadcast signal when the second set of keys are selected, and
displaying on the display the broadcast program stored in the memory when the first set of keys are selected.

14. The control method according to claim 13, wherein the broadcast program stored next to a lastly reproduced broadcast program is reproduced according to the stored temporal order of the stored broadcast programs when an up key of the first set of keys is selected.

15. The control method according to claim 13, wherein the broadcast program stored prior to the lastly reproduced broadcast program is reproduced when a down key of the first set of keys is selected.
